# EUROPEAN PATENT APPLICATION

(11) **EP 4 741 144 A1**
(43) Date of publication of application: **13.05.2026**
(21) Application number: 25210987.1
(22) Date of filing: 24.10.2025
(51) Int. Cl.: B29C 70/50, B29D 99/00

(54) **VARIABLE ROLLER ASSEMBLY AND A METHOD OF CONTROLLING THE VARIABLE ROLLER ASSEMBLY**

(30) Priority: 11.11.2024 US 202463718911 P; 08.08.2025 US 202519295443
(71) Applicant: The Boeing Company, Arlington, VA 22202 (US)
(72) Inventor: LAMMERS, David Dean, Arlington, VA, 22202 (US); FORSTON, Gabriel Zane, Arlington, VA, 22202 (US)
(74) Representative: Hoffmann Eitle

(57) **Abstract**

A method and a variable roller assembly (10) for forming one or more radii along a composite material blank includes a roller die configured to form the one or more radii along the composite material blank (12) to form a filler (14). A first actuator (38) is operably coupled to the roller die (32) and configured to move the roller die (32) in a linear direction along a y-axis, and a second actuator (40) operably coupled to the roller die and configured to move the roller die in a linear direction along a z-axis. A controller (50) is in communication with the first actuator and the second actuator to selectively activate the first actuator and/or the second actuator to variably move the roller die relative to the composite material blank to maintain engagement of the roller die with the composite material blank to form the one or more radii along the composite material blank to form the filler (14).

## Description

### RELATED APPLICATION

The present application is a non-provisional of and claims priority to U.S. Provisional Patent Application No. 63/718,911, filed on November 11, 2024, entitled "VARIABLE ROLLER ASSEMBLY AND A METHOD OF CONTROLLING THE VARIABLE ROLLER ASSEMBLY," the complete disclosure of which is incorporated by reference.

### BACKGROUND

Aircraft are being designed and manufactured with greater percentages of composite materials. Composite materials are used in aircraft to decrease the weight of the aircraft. This decreased weight improves performance features such as payload capacities and fuel efficiencies. Further, composite materials provide longer service life for various components in an aircraft.

Composite materials are tough, lightweight materials created by combining two or more functional components. For example, a composite material may include reinforcing fibers bound in a polymer resin matrix. The fibers may be unidirectional or may take the form of a woven cloth or fabric. In thermoset composites, fibers and resins are arranged and cured to form a composite material.

When composite structural members are joined together, gaps or voids may be present along bond lines between the members which may need to be filled in order to increase the strength of the bond. For example, in the aircraft industry, composite fuselage stiffeners such as stringers may include a composite filler at the convex radius bond line between the stringer and a fuselage skin. The composite filler is applied in the form of triangular cross-section strips, sometimes referred to as noodles or fillers, which fill the voids at the bond line. The composite filler may be formed from composite materials such as adhesive or prepreg tape.

Composite fillers may be formed using a variety of different methods. For example, composite fillers may be formed by pulling a composite material through a series of rollers. By pulling a composite material through a series of rollers, the composite material may be incrementally formed along its length. However, pulling composite material through a series of rollers may result in the composite filler having undesirable quality, such as distortion of the composite material or create visual inconsistencies caused by rubbing of the composite material. As another example, conventional techniques may implement tooling that rigidly fixes a tooling angle and radii that may be formed along the composite filler.

Therefore, there is a need for an assembly and a method that improves manufacturing processes of a composite material blank being formed into a filler.

### SUMMARY

Apparatuses and methods for variable roller assembly are disclosed. In some examples, a variable roller assembly for forming one or more radii along a composite material blank is disclosed. In some examples, the variable roller assembly comprises a platform, a roller die, a first actuator, a second actuator, and a controller. In some examples, the platform is configured to support the composite material blank. In some examples, the roller die is configured to form the one or more radii along the composite material blank, wherein forming the one or more radii along the composite material forms a filler. In some examples, the first actuator is operably coupled to the roller die and configured to move the roller die in a linear direction along a y-axis. In some examples, the second actuator is operably coupled to the roller die and configured to move the roller die in a linear direction along a z-axis. In some examples, the controller is in communication with the first actuator and the second actuator. In some examples, the controller is configured to: selectively activate the first actuator and/or the second actuator to variably move the roller die relative to the composite material blank, and maintain engagement of the roller die with the composite material blank to form the one or more radii along the composite material blank.

A method of controlling a variable roller assembly to form one or more radii along a composite material blank to form a filler is disclosed. In some examples of the method, a platform is configured to support the composite material blank. In some examples, the method comprises moving the composite material blank relative to a roller die. In some examples, the method comprises applying pressure, via the roller die, to the composite material blank to form the one or more radii of the filler. In some examples, the method comprises selectively activating a first actuator and/or a second actuator, via a controller, to variably move the roller die in a linear direction along a y-axis and/or in a linear direction along a z-axis relative to the composite material blank to maintain engagement of the roller die with the composite material blank to form the one or more radii along the composite material blank.

### BRIEF DESCRIPTION OF THE DRAWINGS

FIG. 1 is a schematic illustration of tooling equipment comprising a variable roller assembly.
FIG. 2 is a schematic fragmented view of structural members having a filler therebetween.
FIG. 3 is a schematic perspective view of the variable roller assembly illustrating one side of a roller die relative to a composite material blank.
FIG. 4 is a schematic perspective view of both sides of the roller die illustrating different example orientations/positions of a first roller and a second roller of the roller die relative to different positions along the composite material blank.
FIG. 5 is a schematic side view of a pair of the first roller and the second roller illustrating different example orientations/positions relative to the composite material blank.
FIG. 6 is a schematic side view of one of the rollers illustrating different example radii.
FIG. 7 is a schematic side view of one side of the roller die relative to the composite material blank.
FIG. 8 is another schematic perspective view of the variable roller assembly illustrating one side of the roller die.
FIG. 9 is another schematic perspective view of the variable roller assembly illustrating one side of the roller die with the first roller in a different orientation/position as compared to FIG. 8.
FIG. 10 is another schematic perspective view of the variable roller assembly illustrating one side of the roller die with the first roller in a different orientation/position as compared to FIGS. 8 and 9.
FIG. 11 is another schematic perspective view of the variable roller assembly illustrating one side of the roller die with the first roller in a different orientation/position as compared to FIGS. 8-10.
FIG. 12 is a flowchart illustrating a method of controlling a variable roller assembly to form one or more radii along a composite material blank.

The present disclosure may be extended to modifications and alternative forms, with representative configurations shown by way of example in the drawings and described in detail below. Inventive aspects of the disclosure are not limited to the disclosed configurations. Rather, the present disclosure is intended to cover modifications, equivalents, combinations, and alternatives falling within the scope of the disclosure as defined by the appended claims.

### DETAILED DESCRIPTION

Those having ordinary skill in the art will recognize that all directional references (e.g., above, below, upward, up, downward, down, top, bottom, left, right, vertical, horizontal, etc.) are used descriptively for the FIGS. to aid the reader's understanding, and do not represent limitations (for example, to the position, orientation, or use, etc.) on the scope of the disclosure, as defined by the appended claims. Moreover, terms such as "first," "second," "third," and so on, may be used to describe separate components. Such terminology may include the words specifically mentioned above, derivatives thereof, and words of similar import. Furthermore, the term "substantially" can refer to a slight imprecision or slight variance of a condition, quantity, value, or dimension, etc., some of which are within manufacturing variance or tolerance ranges.

As used herein, an element or step recited in the singular and preceded by the word "a" or "an" should be understood as not necessarily excluding the plural of the elements or steps. That is, "a", "an", "the", "at least one", and "one or more" are used interchangeably to indicate that at least one of the items is present and more than one may be present, unless stated otherwise. Further, any reference to "one configuration" is not intended to be interpreted as excluding the existence of additional configurations that also incorporate the recited features. Moreover, unless explicitly stated to the contrary, configurations "comprising" or "having" an element or a plurality of elements having a particular property may include additional elements not having that property. The phrase "at least one of" as used herein should be construed to include the non-exclusive logical "or", i.e., A and/or B and so on depending on the number of components.

As used herein, the terms "selective" and "selectively," when modifying an action, movement, configuration, or other activity of one or more components or characteristics of an apparatus, mean that the specific action, movement, configuration, or other activity is a direct or indirect result of user manipulation of an aspect of, or one or more components of, the apparatus

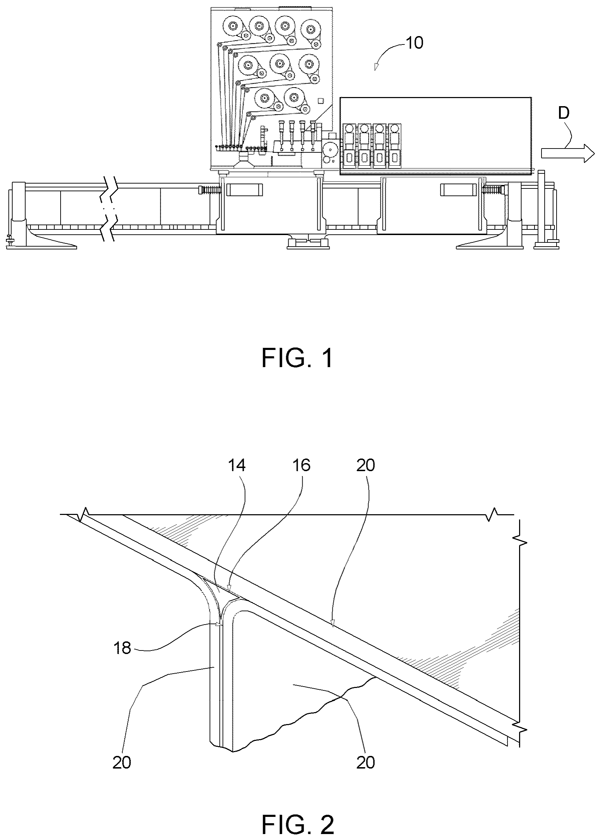

Referring to the figures, wherein like numerals indicate like or corresponding parts throughout the several views, a variable roller assembly 10 for forming one or more radii R along a composite material blank 12 is generally shown in FIG. 1.

Referring to FIG. 2, the composite material blank 12 may be formed into a filler 14, via the variable roller assembly 10, which fills a gap 16 or a void along a bond line 18 between structural members 20. By filling the gap 16/void, the filler 14 may increase the strength of the bond between the structural members 20. Any suitable number of fillers 14 may be used to fill any gaps 16 or voids between various structural members 20. The fillers 14 may be different configurations depending on the size/shape of the gap 16/void being filled, in which the variable roller assembly 10 may be implemented to accommodate different sizes/shapes of the gap 16/void.

The structural members 20 may be any suitable configuration depending on the application. For example, the structural members 20 may be configured as parts of an aircraft, a vehicle, a locomotive, a watercraft, a robot, or any other parts of a movable platform, whether autonomous or non-autonomous. As one example, if the structural members 20 are for an aircraft application, the structural members 20 may be for fuselage stiffeners such as stringers, for filling the gaps 16/voids between fuselage skins, stabilizers, wings, etc.

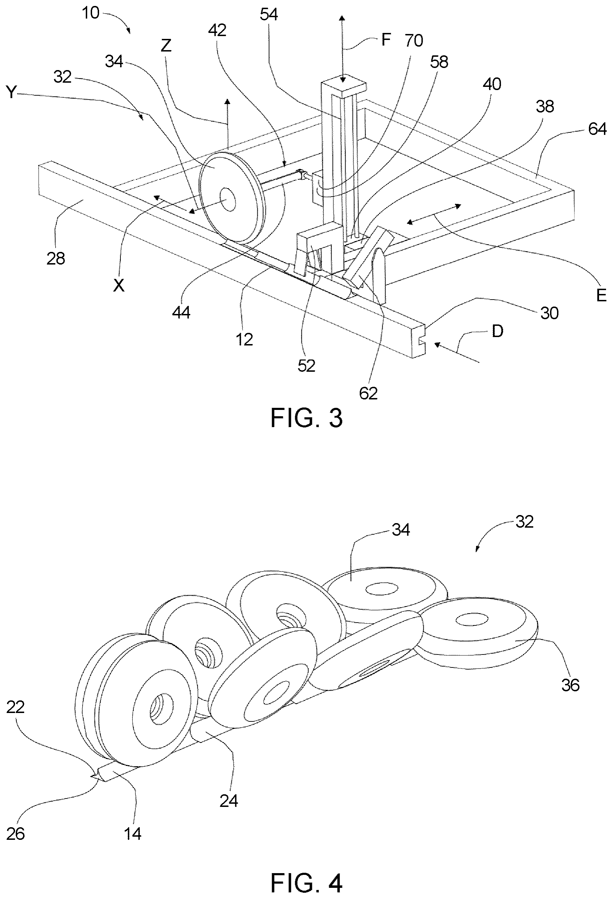

Generally, the composite material blank 12 is transformed into a different shape via the variable roller assembly 10 to form the filler 14 of the desired shape depending on the configuration of the gap 16/void. As such, the variable roller assembly 10 is configured to be adjustable or variable to form each filler 14 having one radius R or to provide each filler 14 having a plurality of different radii R. For example, the variable roller assembly 10 may form the filler 14 into a generally triangular cross-sectional shape, sometimes referred to as noodles or fillers 14, which fill the gaps 16 /voids at the bond line 18. For the below discussion, the filler 14 is assumed to form a triangular cross-sectional shape as shown in FIGS. 2 and 3, but the filler 14 disposed between different structural members 20 may have different cross-sections than shown in the figures. Therefore, for illustrative purposes for the below discussion, the filler 14 has three sides 22, 24, 26, i.e., a first side 22, a second side 24, and a third side 26.

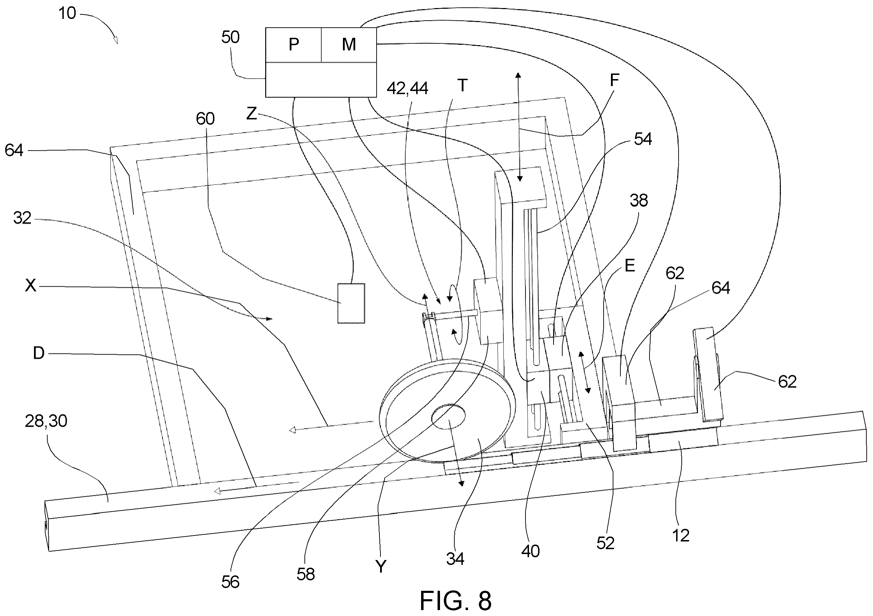

FIG. 3 depicts an example of the variable roller assembly 10 that includes a platform 28 configured to support the composite material blank 12. The platform 28 includes a track 30 configured to move the composite material blank 12 along an x-axis X (FIGS. 3 and 8 illustrate an example direction of movement (see arrow D) of the composite material blank 12). The third side 26 of the filler 14 abuts the track 30. The track 30 may be any suitable configuration, and non-limiting examples of the track 30 may include one or more of rollers, belts, chains, conveyors, cables, mandrels, or any other suitable components to allow movement of the composite material blank 12.

The composite material blank 12 may be formed of two or more materials. For example, the composite material blank 12 may include reinforcing fibers bound in a polymer resin matrix. The fibers may be unidirectional or may take the form of a woven cloth or fabric. In thermoset composites, fibers and resins are arranged and cured to form a composite material filler 14.

Referring to FIG. 3, the variable roller assembly 10 also includes a roller die 32 configured to form the one or more radii R along the composite material blank 12 to form the filler 14. Generally, the roller die 32 may include a first roller 34 that engages the composite material blank 12 as the composite material blank 12 moves along the x-axis X. The first roller 34 applies a pressure, more specifically, a compaction pressure, to the composite material blank 12 as the first roller 34 rolls over the composite material blank 12 to form the one or more radii R on the first side 22 of the filler 14.

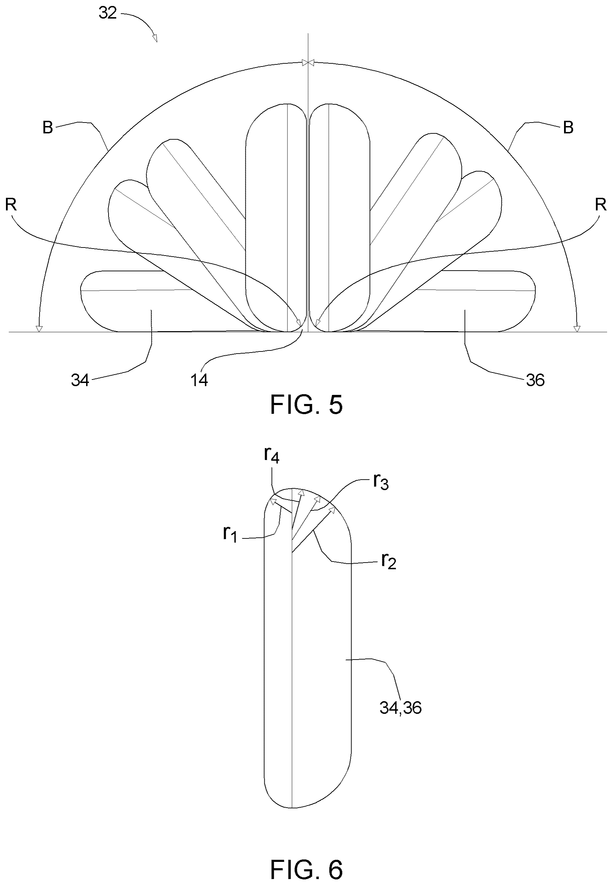

In certain configurations, the roller die 32 may include both the first roller 34 and a second roller 36 cooperating with each other, i.e., a pair of rollers 34, 36, and each of the first roller 34 and the second roller 36 rotate over the composite material blank 12 as the composite material blank 12 moves along the x-axis X. Even though FIG. 3 does not illustrate the second roller 36, which is illustrated in FIG. 4, it is to be appreciated that the features cooperating with the first roller 34 as shown in FIG. 3 are duplicated on the other side, i.e., the second side 24, of the composite material blank 12 to form the one or more radii R on the second side 24 of the filler 14. That is, the second roller 36 and the associated features are mirrored to the other side of the first roller 34. FIGS. 4 and 5 illustrate the pair of rollers 34, 36, i.e., the first roller 34 and the second roller 36 of the roller die 32 relative to the sides 22, 24, 26 of the composite material blank 12, with example variable angular movement (see arrows B of FIG. 5) of the rollers 34, 36 relative to the filler 14, which changes or varies the radii R formed on the composite material blank 12. That is, the roller die 32, i.e., the first roller 34 and the second roller 36, has a variable angle of incident relative to the radius/radii R formed on the filler 14. As one non-limiting example, the first roller 34 and the second roller 36 may change angles, i.e., variable angles, (see arrows B of FIG. 5) of about zero degrees to about ninety degrees as shown in FIGS. 4 and 5.

Referring to FIG. 6, the roller die 32, and more specifically the first roller 34 and the second roller 36, may have one or more radii r₁-r₄, which correspondingly forms one or more radii R in the composite material blank 12. In certain configurations, the roller die 32 has one radius r₁-r₄. More specifically, the first roller 34 may have the one radius r₁-r₄ configured to form the radius R of one side, i.e., the first side 22, of the filler 14, and the second roller 36 may have the one radius r₁-r₄ configured to form the radius R of another side, i.e., the second side 24, of the filler 14. In other configurations, the roller die 32 has a plurality of radii r₁-r₄, with each of the radii r₁-r₄ being different from each other, and therefore, depending on the angle of incident of the rollers 34, 36 relative to the sides 22, 24 of the composite material blank 12, the radius r₁-r₄ of the rollers 34, 36 engaging the composite material blank 12 correspondingly changes. For illustrative purposes, FIG. 6 illustrates a plurality of different radii r₁-r₄ of an example roller, in which any one of those illustrated radii r₁-r₄ may be the only radius of the example roller.

Referring to FIG. 4, the composite material blank 12 may be disposed between the first roller 34 and the second roller 36 to form the one radius R or to form the one or more radii R of respective sides 22, 24 of the filler 14. As such, the first roller 34 may have the plurality of radii r₁-r₄ configured to form one side, i.e., the first side 22, of the filler 14 and the second roller 36 may have the plurality of radii r₁-r₄ configured to form another side, i.e., the second side 24, of the filler 14. The below discussion will mainly focus on the components associated with one of the rollers 34, 36, i.e., the first roller 34, but it is to be appreciated that the same components would be duplicated/mirrored on the other side of the first roller 34 for the second roller 36.

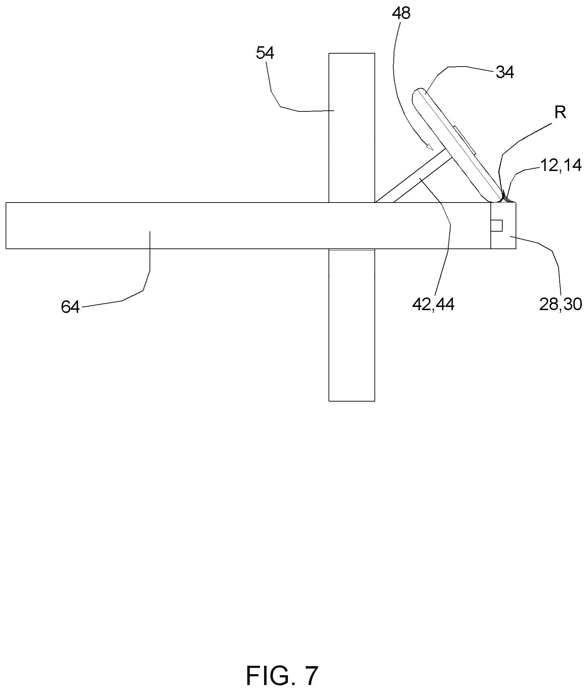

Referring to FIG. 7, depending on the position and/or angle of the first roller 34 relative to the composite material blank 12, the one or more radii R is formed in the composite material blank 12. The roller die 32, and more specifically, the rollers 34, 36, is adjustable or variable to form the one or more radii R of the filler 14 (see FIG. 5). Next, the components to adjust or vary the orientation/position of the roller die 32 are discussed.

Turning to FIGS. 3 and 8, the variable roller assembly 10 further includes a first actuator 38 operably coupled to the roller die 32 and configured to move the roller die 32 in a linear direction along a y-axis Y. More specifically, activation of the first actuator 38 causes movement of the first roller 34 linearly along the y-axis Y. The first actuator 38 may be any suitable configuration, and non-limiting examples of the first actuator 38 may include a motor, or any other suitable actuator to cause linear movement.

Continuing with FIGS. 3 and 8, the variable roller assembly 10 also includes a second actuator 40 operably coupled to the roller die 32 and configured to move the roller die 32 in a linear direction along a z-axis Z. More specifically, activation of the second actuator 40 causes movement of the first roller 34 linearly along the z-axis Z. The second actuator 40 may be any suitable configuration, and non-limiting examples of the second actuator 40 may include a motor, or any other suitable actuator to cause linear movement. The x-axis X, the y-axis Y, and the z-axis Z cooperate to set up a three-dimensional coordinate system.

Generally, a clevis 42 is operably coupled to the roller die 32. More specifically, the clevis 42 supports the first roller 34. The roller die 32, and more specifically, the first roller 34 is rotatably supported via the clevis 42. The first actuator 38 and the second actuator 40 are operably coupled to the clevis 42 to transfer movement to the roller die 32, and specifically to the first roller 34. As such, actuation via the first actuator 38 and/or the second actuator 40 causes movement of the clevis 42 which correspondingly moves the first roller 34.

In certain configurations, the clevis 42 may include an arm 44 having a proximal end 46 and a distal end 48. The proximal end 46 of the arm 44 may be operably coupled to at least one of the first actuator 38 and the second actuator 40. Furthermore, the roller die 32 may be operably coupled to the distal end 48 of the arm 44.

The variable roller assembly 10 also includes a controller 50 (see FIG. 8) in communication with the first actuator 38 and the second actuator 40. Examples of the controller 50 are configured to selectively activate the first actuator 38 and/or the second actuator 40 to variably move the roller die 32 relative to the composite material blank 12. Examples of the controller 50 are configured to maintain engagement of the roller die 32 with the composite material blank 12 to form the one or more radii R along the composite material blank 12 to form the filler 14. In other words, examples of the controller 50 are configured to control the first actuator 38 and the second actuator 40 to provide the desired angular orientation/position of the roller die 32 relative to the composite material blank 12. As such, the controller 50 is configured to move the roller die 32 to vary a contact angle of the radii r₁-r₄ of the roller die 32 relative to the composite material blank 12 to vary the one or more radii R formed on the composite material blank 12. Examples of the controller 50 are configured to control the angle of incident of the roller die 32 and controls the pressure, i.e., compaction pressure, during forming of the filler 14. It is to be appreciated that the controller 50 is omitted in some of the figures, but the controller 50 would be in communication with the various components in those figures as well to control the roller die 32 as described herein.

A controller 50 may be any suitable device or devices that are configured to perform the functions of the controller discussed herein. For example, the controller may include one or more of an electronic controller, a dedicated controller, a special-purpose controller, a personal computer, a special-purpose computer, a display device, a logic device, a memory device, and/or a memory device having computer readable media suitable for storing computer-executable instructions for implementing aspects of systems and/or methods according to the present disclosure.

The controller 50 is configured to execute the instructions from memory M, via a processor P. For example, the controller 50 may be a host machine or distributed system, e.g., a computer such as a digital computer or microcomputer, and, as the memory M, tangible, non-transitory computer-readable memory such as read-only memory (ROM) or flash memory. The controller 50 may also have random access memory (RAM), electrically erasable programmable read-only memory (EEPROM), a high-speed clock, analog-to-digital (A/D) and/or digital-to-analog (D/A) circuitry, and any required input/output circuitry and associated devices, as well as any required signal conditioning and/or signal buffering circuitry. Therefore, the controller 50 may include all software, hardware, memory M, algorithms, connections, sensors, etc., necessary to control, for example, the first actuator 38, the second actuator 40, and a third actuator (discussed further below). As such, a control method operative to control the first actuator 38, the second actuator 40, and the third actuator, may be embodied as software or firmware associated with the controller 50. It is to be appreciated that the controller 50 may also include any device capable of analyzing data from various sensors, devices, comparing data, making the necessary decisions required to control and/or monitor the roller die 32, the first actuator 38, the second actuator 40 and the third actuator. Optionally, more than one controller 50 may be implemented, and if a plurality of controller 50 are implemented, each of the controllers 50 may communicate with each other.

Referring to FIGS. 3 and 8, the variable roller assembly 10 may include a first rail component 52 disposed in the linear direction relative to the y-axis Y. The first actuator 38 is operably coupled to the first rail component 52. The first actuator 38 is configured to control movement of the roller die 32, and more specifically the first roller 34, in the linear direction along the y-axis Y. As such, activation of the first actuator 38 causes linear movement of the first actuator 38 along the first rail component 52 relative to the y-axis Y (see arrow E in FIG. 8), which correspondingly moves the first roller 34 along the y-axis Y.

Continuing with FIGS. 3 and 8, the variable roller assembly 10 may include a second rail component 54 disposed in the linear direction relative to the z-axis Z. The second actuator 40 is operably coupled to the second rail component 54. The second actuator 40 is configured to control movement of the roller die 32, and more specifically, the first roller 34, in the linear direction along the z-axis Z. As such, activation of the second actuator 40 causes linear movement of the second rail component 54 relative to the z-axis Z (see arrow F in FIG. 8), which correspondingly moves the first roller 34 along the z-axis Z. In certain configurations, the first actuator 38 and the second actuator 40 are attached to each other such that the first actuator 38 does not move relative to the z-axis Z. Therefore, generally, the first rail component 52 and the second rail component 54 are operably coupled to each other through the first actuator 38 and the second actuator 40 such that movement of the first actuator 38 along the first rail component 52 correspondingly adjusts a position of the second actuator 40 relative to the y-axis Y, but movement of the second rail component 54 relative to the z-axis Z does not adjust a position of the first actuator 38 relative to the z-axis Z.

Referring to FIG. 8, an attachment point 56 is fixed to the second rail component 54. Generally, the clevis 42 is attached to the attachment point 56. More specifically, the arm 44 of the clevis 42 is attached to the attachment point 56.

Continuing with FIG. 8, a feature 58 may be operably coupled to the roller die 32 to maintain engagement of the first roller 34 with the composite material blank 12, and more specifically, provides the compaction pressure between the first roller 34 and the composite material blank 12. In certain configurations, the feature 58 may be a biaser that provides down pressure, i.e., compaction pressure, to maintain engagement of the first roller 34 with the composite material blank 12. The biaser may create a torque (see arrow T in FIG. 8) to continuously bias the first roller 34 toward the composite material blank 12. In certain configurations, the biaser may include a spring, a torsion spring, or any other component to provide down pressure, i.e., compaction pressure.

Examples of the variable roller assembly 10 include a third actuator 70 operably coupled to the clevis 42 (see FIG. 3). The third actuator 70 is configured to rotate the roller die 32, and more specifically the first roller 34, about a pivot point (see arrow T in FIG. 8). The third actuator 70 is configured to provide the down pressure, i.e., compaction pressure via the first roller 34. As such, in certain configurations, the feature 58 may include the third actuator 70, as depicted in FIG. 3, to control rotational movement of the clevis 42 to maintain engagement of the roller die 32, more specifically, the first roller 34, with the composite material blank 12. Furthermore, the third actuator 70 may provide the compaction pressure between the first roller 34 and the composite material blank 12. The third actuator 70 may be operably coupled to the attachment point 56 and the clevis 42. The third actuator 70 is configured to rotate the roller die 32, and more specifically, the first roller 34, relative to the composite material blank 12. The third actuator 70 may be any suitable configuration, and non-limiting examples of the third actuator 70 may include a motor, or any other suitable actuator to cause linear movement.

Optionally, the variable roller assembly 10 may include a feedback device 60 (see FIG. 8) in communication with the controller 50. The controller 50 is configured to determine whether to adjust the roller die 32, and more specifically the first roller 34, along the y-axis Y and/or the z-axis Z to maintain that the desired radii R is being formed along the composite material blank 12 and/or to maintain that the desired pressure between the roller die 32, and more specifically the first roller 34, and the composite material blank 12 is obtained. Generally, the feedback device 60 is also operably coupled to the clevis 42, such as the arm 44, or operably coupled to the third actuator 70 (if being implemented). The feedback device 60 is configured to provide force feedback of the roller die 32 to the controller 50. The controller 50 is configured to determine whether to adjust the roller die 32, and more specifically the first roller 34, along the y-axis Y and/or the z-axis Z. It is to be appreciated that the feedback device 60 is omitted in some of the figures, but the feedback device 60 may optionally be implemented in those figures as well to provide feedback as described herein.

In certain configurations, the feedback device 60 may include a strain gauge configured to provide pressure information about the roller die 32, and more specifically the first roller 34, engaging the composite material blank 12. In other configurations, the feedback device 60 may include a torque gauge configured to provide pressure information about the roller die 32, and more specifically the first roller 34, engaging the composite material blank 12. If the third actuator 70 is implemented, optionally, the torque gauge may be operably coupled to the third actuator 70 to provide motor torque feedback, or the feedback device 60 may be a gauge that utilizes current draw of the actuator to provide feedback about the pressure information.

Turning to FIGS. 3 and 8, optionally, the composite material blank 12 may be heated before or after forming the one or more radii R. For example, the variable roller assembly 10 may optionally include a heater 62 disposed proximal to the composite material blank 12 to heat the composite material blank 12. That is, the heater 62 may provide localized heating of the composite material blank 12. As such, the heater 62 may be disposed relative to the composite material blank 12 before forming the one or more radii R via the roller die 32 or the heater 62 may be disposed relative to the filler 14 after forming the one or more radii R. When the heater 62 is disposed before the roller die 32, heat from the heater 62 softens the composite material blank 12 to make the composite material blank 12 more pliable for forming the one or more radii R. Examples of the controller 50 are in communication with the heater 62 to control when the heater 62 operates and/or the temperature of the heat being radiated from the heater 62. The heater 62 may be any suitable configuration, and non-limiting examples of the heater 62 may include a radiant heater and/or a blower heater.

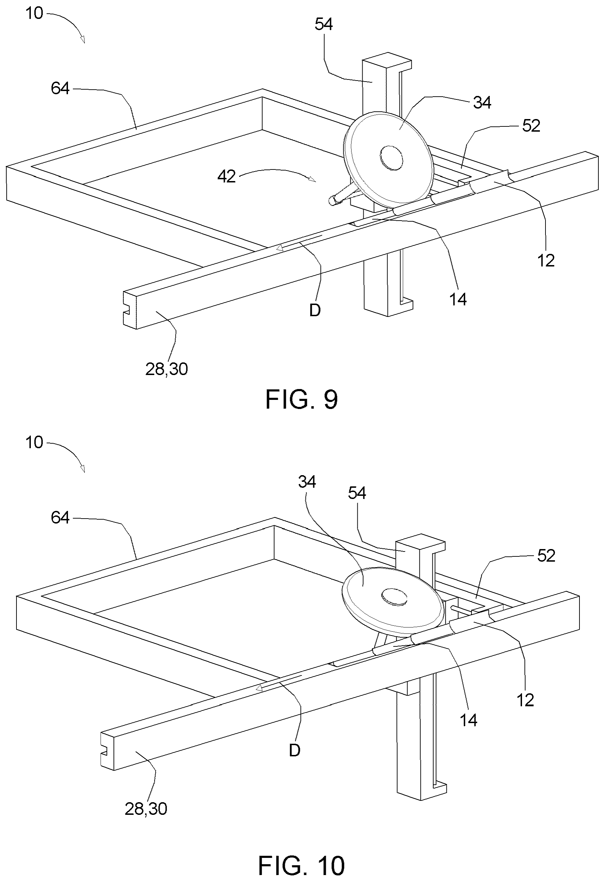

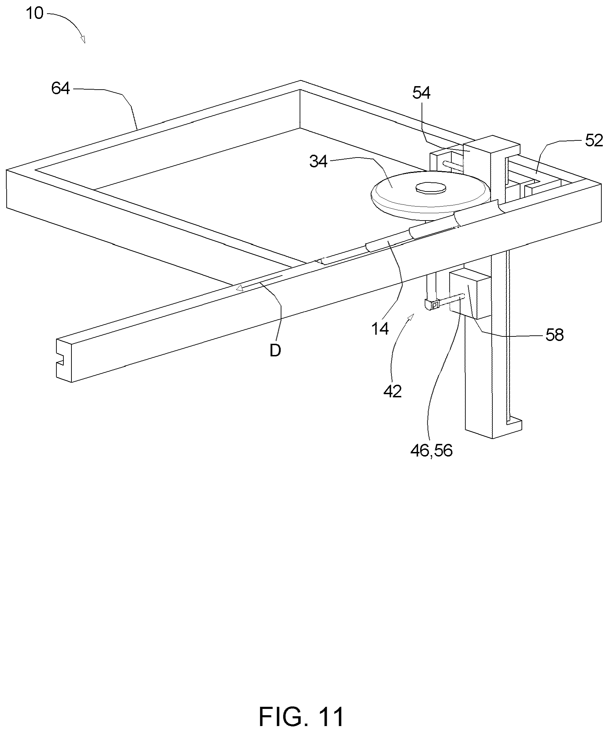

Any suitable number of heaters 62 may be implemented to heat the composite material blank 12. FIGS. 3 and 8 illustrate two different heaters 62 for illustrative purposes, but it is to be appreciated that one heater 62 may be used instead of a plurality of heaters 62, and a plurality of the same heaters 62 may be implemented instead of different heaters 62. Furthermore, FIGS. 3 and 8 illustrate the heaters 62 before the roller die 32 relative to the direction of movement (see arrow D) of the composite material blank 12, but it is to be appreciated that one or more of the heaters 62 may be disposed after the roller die 32. The heaters 62 have been omitted from FIGS. 9-11, but it is to be appreciated that the heaters 62 may be implemented into these figures as well.

The variable roller assembly 10 may include one or more brackets 64 to support the heaters 62, the first roller 34 and associated features of the roller die 32, the first actuator 38, the second actuator 40, and the third actuator 70 (if implementing the third actuator 70), and any other components of the variable roller assembly 10 that may be supported via the one or more brackets 64. The track 30 is separated from the brackets 64 such that the track 30 may move independently of the one or more brackets 64.

As mentioned above, the second roller 36 and the associated components are mirrored to the other side of the first roller 34. More specifically, another first actuator 38, another second actuator 40, another first rail component 52, another second rail component 54, another feature 58 (such as the biaser or the third actuator 70 if being implemented), another feedback device 60 if being implemented, and another clevis 42 may be duplicated to the other side to operate the second roller 36 of the roller die 32. It is to be appreciated that examples of the same controller 50 in communication with the components of the first roller 34 are in communication with the components of the second roller 36 or an additional controller 50 may be in communication with the components of the second roller 36.

It is to be appreciated that a plurality of variable roller assemblies 10 may be disposed next to each other and operate the same as discussed above for one variable roller assembly 10. As such, the controller 50 may be in communication with each of the variable roller assemblies 10 and control the variable movement of each of the roller die 32 as desired. FIG. 1 illustrates three additional variable roller assemblies 10 in phantom lines to illustrate the optional configuration of additional variable roller assemblies 10.

The present disclosure also provides a method of controlling the variable roller assembly 10 to form the one or more radii R along the composite material blank 12 to form the filler 14. The composite material blank 12 is movable relative to the roller die 32. Referring to FIG. 3, the track 30 moves the composite material blank 12 in the linear direction (see arrow D) along the x-axis X.

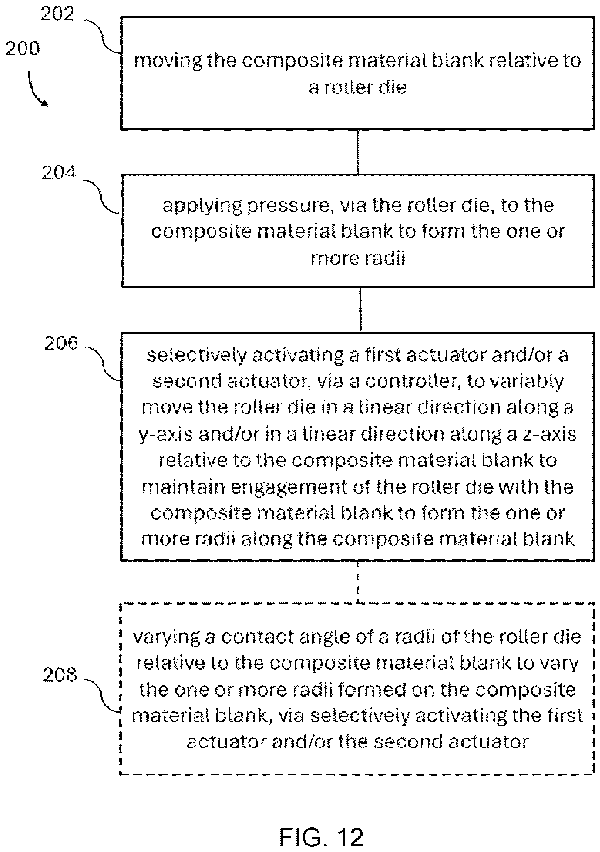

In one example, and referring to FIG. 12, a method 200 of controlling a variable roller assembly to form one or more radii along a composite material blank to form a filler is disclosed. In an example of method 200, a platform is configured to support the composite material blank. An example of method 200 comprises moving 202 the composite material blank relative to a roller die. An example of method 200 comprises applying 204 pressure, via the roller die, to the composite material blank to form the one or more radii. An example of method 200 comprises selectively activating 206 a first actuator and/or a second actuator, via a controller, to variably move the roller die in a linear direction along a y-axis and/or in a linear direction along a z-axis relative to the composite material blank to maintain engagement of the roller die with the composite material blank to form the one or more radii along the composite material blank. Another example of method 200 comprises varying 208 a contact angle of a radii of the roller die relative to the composite material blank to vary the one or more radii formed on the composite material blank, via selectively activating the first actuator and/or the second actuator.

The track 30 allows for continuous movement of the composite material blank 12 in order to continuously form the radius R of the filler 14, and, if desired, varying the orientation/position of the roller die 32 during such movement of the composite material blank 12 to form the desired variable radii R along the filler 14. The controller 50 is configured to control the first actuator 38 and the second actuator 40 to orientation/position the angle of the roller die 32 relative to the composite material blank 12. The roller die 32 applies pressure, i.e., compaction pressure, to the composite material blank 12 to form the one or more radii R of the filler 14. The first actuator 38 and/or the second actuator 40 are selectively activated, via the controller 50, to variably move the roller die 32 in the linear direction along the y-axis Y and/or in the linear direction along the z-axis Z relative to the composite material blank 12 to maintain engagement of the roller die 32 with the composite material blank 12 to form the one or more radii R along the composite material blank 12 to form the filler 14. Similarly, if implementing the third actuator 70, the controller 50 is configured to selectively activate the third actuator 70 to control the compaction pressure.

The contact angle of the radii r₁-r₄ of the roller die 32 is variable relative to the composite material blank 12 to vary the one or more radii R formed on the composite material blank 12, via selectively activating the first actuator 38 and/or the second actuator 40. FIGS. 9-11 illustrate different positions of the roller die 32, specifically the first roller 34, relative to the composite material blank 12 to illustrate different radii R being formed along one filler 14.

Before and/or after forming the radius/radii R along the filler 14, the controller 50 is configured to activate one or more of the heaters 62 to soften the composite material blank 12. Heating the filler 14 may also assist in setting the profile of the filler 14.

Examples of the controller 50 are in communication with the feedback device 60 to ensure that the roller die 32 is orientated/positioned as desired relative to the composite material blank 12 before forming and/or during the forming process of the filler 14.

It is to be appreciated that the order or sequence of performing the method as discussed above is for illustrative purposes and other orders or sequences are within the scope of the present teachings. It is to also be appreciated that the method may include other features not specifically discussed immediately above.

While the best modes and other configurations for carrying out the disclosure have been described in detail, those familiar with the art to which this disclosure relates will recognize various alternative designs and configurations for practicing the disclosure within the scope of the appended claims. Furthermore, the configurations shown in the drawings or the characteristics of various configurations mentioned in the present description are not necessarily to be understood as configurations independent of each other. Rather, it is possible that each of the characteristics described in one of the examples of a configuration can be combined with one or a plurality of other desired characteristics from other configurations, resulting in other configurations not described in words or by reference to the drawings. Accordingly, such other configurations fall within the framework of the scope of the appended claims.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

Illustrative, non-exclusive examples of inventive subject matter according to the present disclosure are described in the following enumerated paragraphs:
A. A variable roller assembly (10) for forming one or more radii along a composite material blank (12), the variable roller assembly (10) comprising:
   a platform (28) configured to support the composite material blank (12);
   a roller die (32) configured to form the one or more radii along the composite material blank (12), wherein forming the one or more radii along the composite material blank (12) forms a filler (14);
   a first actuator (38) operably coupled to the roller die (32) and configured to move the roller die (32) in a linear direction along a y-axis;
   a second actuator (40) operably coupled to the roller die (32) and configured to move the roller die (32) in a linear direction along a z-axis; and
   a controller (50) in communication with the first actuator (38) and the second actuator (40), wherein the controller (50) is configured to:
      selectively activate the first actuator (38) and/or the second actuator (40) to variably move the roller die (32) relative to the composite material blank (12), and
      maintain engagement of the roller die (32) with the composite material blank (12) to form the one or more radii along the composite material blank (12).
A1. The variable roller assembly (10) of paragraph A, further comprising a clevis (42) operably coupled to the roller die (32), wherein the first actuator (38) and the second actuator (40) are operably coupled to the clevis (42) to transfer movement to the roller die (32).
A2. The variable roller assembly (10) of any of paragraphs A-A1, further comprising a third actuator (70) operably coupled to the clevis (42), wherein the third actuator (70) is configured to rotate the roller die (32) about a pivot point.
A3. The variable roller assembly (10) of any of paragraphs A-A2, further comprising a first rail component (52) disposed in the linear direction relative to the y-axis, wherein the first actuator (38) is operably coupled to the first rail component (52), wherein the first actuator (38) is configured to control movement of the roller die (32) in the linear direction along the y-axis.
A4. The variable roller assembly (10) of any of paragraphs A-A3, further comprising a second rail component (54) disposed in the linear direction relative to the z-axis, wherein the second actuator (40) is operably coupled to the second rail component (54), wherein the second actuator (40) is configured to control movement of the roller die (32) in the linear direction along the z-axis.
A5. The variable roller assembly (10) of paragraph A4, wherein the first rail component (52) and the second rail component (54) are operably coupled to each other through the first actuator (38) and the second actuator (40) such that movement of the first actuator (38) along the first rail component (52) correspondingly adjusts a position of the second actuator (40) relative to the y-axis, and movement of the second rail component (54) relative to the z-axis does not adjust a position of the first actuator (38) relative to the z-axis.
A6. The variable roller assembly (10) of any of paragraphs A-A5, wherein the platform (28) includes a track (30) configured to move the composite material blank (12) along a x-axis, and wherein the roller die (32) includes a first roller (34) that engages the composite material blank (12) as the composite material blank (12) moves along the x-axis.
A7. The variable roller assembly (10) of any of paragraphs A-A6, further comprising an attachment point (56) fixed to the second rail component (54), wherein the clevis (42) is attached to the attachment point (56).
A8. The variable roller assembly (10) of paragraph A7, further comprising a third actuator (70) operably coupled to the attachment point (56) and the clevis (42), and wherein the third actuator (70) is configured to rotate the roller die (32) relative to the composite material blank (12).
A9. The variable roller assembly (10) of any of paragraphs A-A8, further comprising a feedback device (60) in communication with the controller (50) and operably coupled to the clevis (42), wherein the feedback device (60) is configured to provide force feedback of the roller die (32) to the controller (50), wherein the controller (50) is configured to determine whether to adjust the roller die (32) along the y-axis and/or the z-axis.
A10. The variable roller assembly (10) of any of paragraphs A-A9, wherein the roller die (32) has a plurality of radii, with each of the radii being different from each other, wherein the controller (50) is configured to move the roller die (32) to vary a contact angle of the radii of the roller die (32) relative to the composite material blank (12) to vary the one or more radii formed on the composite material blank (12).
A11. The variable roller assembly (10) of any of paragraphs A-A10, wherein the roller die (32) includes a first roller (34) and a second roller (36) cooperating with each other, wherein the first roller (34) has the plurality of radii configured to form one side (22) of the filler (14), wherein the second roller (36) has the plurality of radii configured to form another side (24) of the filler (14), wherein the composite material blank (12) is disposed between the first roller (34) and the second roller (36) to form the one or more radii of respective sides (22, 24) of the filler (14).
A12. The variable roller assembly (10) of any of paragraphs A-A9, wherein the roller die (32) has one radius.
A13. The variable roller assembly (10) of paragraph A12, wherein the roller die (32) includes a first roller (34) and a second roller (36) cooperating with each other, wherein the first roller (34) has the one radius configured to form one side (22) of the filler (14), wherein the second roller (36) has the one radius configured to form another side (24) of the filler (14), wherein the composite material blank (12) is disposed between the first roller (34) and the second roller (36) to form the one radius of respective sides (22, 24) of the filler (14).
A14. The variable roller assembly (10) of any of paragraphs A-A13, further comprising a heater (62) disposed proximal to the composite material blank (12) to heat the composite material blank (12) before forming the one or more radii.
A15. The variable roller assembly (10) of any of paragraphs A-A14, wherein the heater (62) includes a radiant heater and/or a blower heater.
A16. The variable roller assembly (10) of any of paragraphs A-A15, further comprising a feedback device (60) in communication with the controller (50), wherein the controller (50) is configured to determine whether to adjust the roller die (32) along the y-axis and/or the z-axis.
A17. The variable roller assembly (10) of paragraph A16, wherein the feedback device (60) includes a strain gauge configured to provide pressure information about the roller die (32) engaging the composite material blank (12).
B. A method (200) of controlling a variable roller assembly (10) to form one or more radii along a composite material blank (12) to form a filler (14), wherein a platform (28) is configured to support the composite material blank (12), the method (200) comprising:
   moving (202) the composite material blank (12) relative to a roller die (32);
   applying (204) pressure, via the roller die (32), to the composite material blank (12) to form the one or more radii of the filler (14); and
   selectively activating (206) a first actuator (38) and/or a second actuator (40), via a controller (50), to variably move the roller die (32) in a linear direction along a y-axis and/or in a linear direction along a z-axis relative to the composite material blank (12) to maintain engagement of the roller die (32) with the composite material blank (12) to form the one or more radii along the composite material blank (12).
B1. The method (200) of paragraph B, further comprising varying (208) a contact angle of a radii of the roller die (32) relative to the composite material blank (12) to vary the one or more radii formed on the composite material blank (12), via selectively activating (206) the first actuator (38) and/or the second actuator (40).
C. The use of the variable roller assembly (10) of any of paragraphs A-A17.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a non-limiting example, a reference to "A and/or B," when used in conjunction with open-ended language such as "comprising," may refer, in one example, to A only (optionally comprising entities other than B); in another example, to B only (optionally comprising entities other than A); in yet another example, to both A and B (optionally comprising other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. A variable roller assembly (10) for forming one or more radii along a composite material blank (12), the variable roller assembly (10) comprising:
a platform (28) configured to support the composite material blank (12);
a roller die (32) configured to form the one or more radii along the composite material blank (12), wherein forming the one or more radii along the composite material blank (12) forms a filler (14);
a first actuator (38) operably coupled to the roller die (32) and configured to move the roller die (32) in a linear direction along a y-axis;
a second actuator (40) operably coupled to the roller die (32) and configured to move the roller die (32) in a linear direction along a z-axis; and
a controller (50) in communication with the first actuator (38) and the second actuator (40), wherein the controller (50) is configured to:
selectively activate the first actuator (38) and/or the second actuator (40) to variably move the roller die (32) relative to the composite material blank (12), and
maintain engagement of the roller die (32) with the composite material blank (12) to form the one or more radii along the composite material blank (12).

2. The variable roller assembly (10) as set forth in claim 1, further comprising a clevis (42) operably coupled to the roller die (32), wherein the first actuator (38) and the second actuator (40) are operably coupled to the clevis (42) to transfer movement to the roller die (32).

3. The variable roller assembly (10) of claim 1 or 2, further comprising a third actuator (70) operably coupled to the clevis (42), wherein the third actuator (70) is configured to rotate the roller die (32) about a pivot point.

4. The variable roller assembly (10) of any one of claims 1-3, further comprising a first rail component (52) disposed in the linear direction relative to the y-axis, wherein the first actuator (38) is operably coupled to the first rail component (52), and wherein the first actuator (38) is configured to control movement of the roller die (32) in the linear direction along the y-axis.

5. The variable roller assembly (10) of any one of claims 1-4, further comprising a second rail component (54) disposed in the linear direction relative to the z-axis, wherein the second actuator (40) is operably coupled to the second rail component (54) and wherein the second actuator (40) is configured to control movement of the roller die (32) in the linear direction along the z-axis, optionally wherein
the first rail component (52) and the second rail component (54) are operably coupled to each other through the first actuator (38) and the second actuator (40) such that movement of the first actuator (38) along the first rail component (52) correspondingly adjusts a position of the second actuator (40) relative to the y-axis, and movement of the second rail component (54) relative to the z-axis does not adjust a position of the first actuator (38) relative to the z-axis.

6. The variable roller assembly (10) of any one of claims 1-5, wherein the platform (28) includes a track configured to move the composite material blank (12) along an x-axis, and wherein the roller die (32) includes a first roller (34) that engages the composite material blank (12) as the composite material blank (12) moves along the x-axis.

7. The variable roller assembly (10) of any one of claims 1-6, further comprising an attachment point (56) fixed to the second rail component (54), wherein the clevis (42) is attached to the attachment point (56), optionally wherein
the variable roller assembly (10) further comprises a third actuator (70) operably coupled to the attachment point (56) and the clevis (42), and wherein the third actuator (70) is configured to rotate the roller die (32) relative to the composite material blank (12).

8. The variable roller assembly (10) of any one of claims 1-7, further comprising a feedback device (60) in communication with the controller (50) and operably coupled to the clevis (42), wherein the feedback device (60) is configured to provide force feedback of the roller die (32) to the controller (50), wherein the controller (50) is configured to determine whether to adjust the roller die (32) along the y-axis and/or the z-axis.

9. The variable roller assembly (10) of any one of claims 1-8, wherein the roller die (32) has a plurality of radii, with each of the radii being different from each other, wherein the controller (50) is configured to move the roller die (32) to vary a contact angle of the radii of the roller die (32) relative to the composite material blank (12) to vary the one or more radii formed on the composite material blank (12), optionally wherein
the roller die (32) includes a first roller (34) and a second roller (36) cooperating with each other, wherein the first roller (34) has the plurality of radii configured to form one side (22) of the filler (14), wherein the second roller (36) has the plurality of radii configured to form another side (24) of the filler (14), wherein the composite material blank (12) is disposed between the first roller (34) and the second roller (36) to form the one or more radii of respective sides (22, 24) of the filler (14).

10. The variable roller assembly (10) of any one of claims 1-8, wherein the roller die (32) has one radius, optionally wherein
the roller die (32) includes a first roller (34) and a second roller (36) cooperating with each other, wherein the first roller (34) has the one radius configured to form one side (22) of the filler (14), wherein the second roller (36) has the one radius configured to form another side (24) of the filler (14), wherein the composite material blank (12) is disposed between the first roller (34) and the second roller (36) to form the one radius of respective sides (22, 24) of the filler (14).

11. The variable roller assembly (10) of any one of claims 1-10, further comprising a heater (62) disposed proximal to the composite material blank (12) to heat the composite material blank (12) before forming the one or more radii, optionally wherein
the heater (62) includes a radiant heater and/or a blower heater.

12. The variable roller assembly (10) of any one of claims 1-11, further comprising a feedback device (60) in communication with the controller (50), wherein the controller (50) is configured to determine whether to adjust the roller die (32) along the y-axis and/or the z-axis.

13. The variable roller assembly (10) of claim 12, wherein the feedback device (60) includes a strain gauge configured to provide pressure information about the roller die (32) engaging the composite material blank (12).

14. A method (200) of controlling a variable roller assembly (10) to form one or more radii along a composite material blank (12) to form a filler (14), wherein a platform (28) is configured to support the composite material blank (12), the method (200) comprising:
moving (202) the composite material blank (12) relative to a roller die (32);
applying (204) pressure, via the roller die (32), to the composite material blank (12) to form the one or more radii of the filler (14); and
selectively activating (206) a first actuator (38) and/or a second actuator (40), via a controller (50), to variably move the roller die (32) in a linear direction along a y-axis and/or in a linear direction along a z-axis relative to the composite material blank (12) to maintain engagement of the roller die (32) with the composite material blank (12) to form the one or more radii along the composite material blank (12).

15. The method (200) of claim 14, further comprising varying (208) a contact angle of a radii of the roller die (32) relative to the composite material blank (12) to vary the one or more radii formed on the composite material blank (12), via selectively activating the first actuator (38) and/or the second actuator (40).
